(19) Europäisches Patentamt
European Patent Office
Office européen des brevets

(11) **EP 4 412 356 A1**

(12) **EUROPEAN PATENT APPLICATION**
published in accordance with Art. 153(4) EPC

(43) Date of publication:
**07.08.2024 Bulletin 2024/32**

(21) Application number: **22875080.8**

(22) Date of filing: **29.09.2022**

(51) International Patent Classification (IPC):
**H04W 72/04** (2023.01)    **H04W 72/02** (2009.01)
**H04W 72/56** (2023.01)    **H04W 24/02** (2009.01)
**H04L 5/00** (2006.01)

(52) Cooperative Patent Classification (CPC):
**H04L 5/00; H04W 24/02; H04W 28/26;**
**H04W 72/02; H04W 72/04; H04W 72/0446;**
**H04W 72/0453; H04W 72/21; H04W 72/53;**
**H04W 72/54; H04W 76/14**

(86) International application number:
**PCT/CN2022/122603**

(87) International publication number:
**WO 2023/051699 (06.04.2023 Gazette 2023/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2021   CN 202111168893**

(71) Applicant: **Sharp Kabushiki Kaisha**
**Sakai City, Osaka 590-8522 (JP)**

(72) Inventors:
• **ZHAO, Yinan**
  **Shanghai 201206 (CN)**
• **LIU, Renmao**
  **Shanghai 201206 (CN)**
• **LUO, Chao**
  **Shanghai 201206 (CN)**

(74) Representative: **Müller-Boré & Partner**
**Patentanwälte PartG mbB**
**Friedenheimer Brücke 21**
**80639 München (DE)**

(54) **METHOD PERFORMED BY USER EQUIPMENT, AND USER EQUIPMENT**

(57)    According to the present invention, provided is a method performed by a user equipment, characterized by comprising: determining a resource conflict caused by resources respectively reserved in one or more SCI formats 1-A, and transmitting a physical sidelink feedback channel (PSFCH) for indication of the resource conflict, wherein a priority value of the PSFCH is equal to the smallest value among priority values respectively indicated by the one or more SCI formats 1-A.

FIG. 1

**Description**

TECHNICAL FIELD

The present invention relates to a method performed by a user equipment, and a user equipment.

BACKGROUND

Sidelink (SL) communication (e.g., when SL resource allocation mode 2 is configured) can support inter-user equipment (UE) coordination functions, e.g., coordination of resource allocation between two or more UEs. The inter-UE coordination functions need to solve a series of problems, for example, how to determine two or more UEs related to inter-UE coordination, and how to determine one or more messages related to inter-UE coordination and definitions, configurations, mapping, transmission, reception, etc., of resources respectively used thereby.

Prior Art Documents

Non-Patent Documents

  Non-Patent Document 1: RP-152293, New WI proposal: Support for V2V services based on LTE sidelink
  Non-Patent Document 2: RP-170798, New WID on 3GPP V2X Phase 2
  Non-Patent Document 3: RP-170855, New WID on New Radio Access Technology
  Non-Patent Document 4: RP-190766, New WID on 5G V2X with NR sidelink
  Non-Patent Document 5: RP-201385, WID revision: NR sidelink enhancement

SUMMARY

In order to solve at least some of the above problems, the present invention provides a method performed by a user equipment and a user equipment. A priority is determined for each resource conflict, so as to determine, on the basis of the priority, whether to transmit one or more resource conflict indications triggered by the resource conflict, thereby effectively solving the problem of priority when resource conflict indications triggered by a plurality of resource conflicts are to be transmitted on overlapping time domain resources.

According to the present invention, provided is a method performed by a user equipment, characterized by comprising: determining a resource conflict caused by resources respectively reserved in one or more SCI formats 1-A, and transmitting a physical sidelink feedback channel (PSFCH) for indication of the resource conflict, wherein a priority value of the PSFCH is equal to the smallest value among priority values respectively indicated by the one or more SCI formats 1-A.

In addition, according to the present invention, provided is a user equipment, comprising: a processor; and a memory, having instructions stored therein, wherein the instructions, when run by the processor, perform the aforementioned method.

Therefore, the present invention provides a method, in which a priority is determined for each resource conflict, so as to determine, on the basis of the priority, whether to transmit one or more resource conflict indications triggered by the resource conflict, thereby effectively solving the problem of priority when resource conflict indications triggered by a plurality of resource conflicts are to be transmitted on overlapping time domain resources.

BRIEF DESCRIPTION OF THE DRAWINGS

The above and other features of the present invention will be more apparent from the following detailed description in combination with the accompanying drawings, in which:

  FIG. 1 is a flowchart showing a method performed by a user equipment according to Embodiment 1 of the present invention; and
  FIG. 2 shows a block diagram of a user equipment (UE) according to the present invention.

DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

In the following description, a 5G (or referred to as "New Radio" (NR) or 5G NR) mobile communication system and later evolved versions thereof (e.g., 5G Advanced) are used as exemplary application environments to specifically describe a plurality of embodiments according to the present invention. However, it is to be noted that the present invention is not limited to the following embodiments, but is applicable to many other wireless communication systems, such as a communication system after 5G and a 4G mobile communication system before 5G.

The terms given in the present invention may vary in Long Term Evolution (LTE), LTE-Advanced, LTE-Advanced Pro, NR, and subsequent communication systems, but unified terms are used in the present invention. When applied to a specific system, the terms may be replaced with terms used in the corresponding system.

Unless otherwise specified, in all embodiments and implementations of the present invention:

- Optionally, the eNB may refer to a 4G base station. For example, the eNB may provide termination of Evolved UMTS Terrestrial Radio Access (E-UTRA) user plane and control plane protocols to the UE. As another example, the eNB may be connected to an Evolved Packet Core (EPC) by means of an S1 interface.
- Optionally, the ng-eNB may refer to an enhanced 4G base station. For example, the ng-eNB may provide termination of E-UTRA user plane and control plane protocols to the UE. As another example, the ng-eNB may be connected to a 5G core network (5GC) by means of an NG interface.
- Optionally, the gNB may refer to a 5G base station. For example, the gNB may provide termination of NR user plane and control plane protocols to the UE. As another example, the gNB may be connected to a 5GC by means of an NG interface.
- Optionally, "send" and "transmit" are interchangeable where applicable.
- Optionally, a "symbol" may refer to an Orthogonal Frequency Division Multiplexing (OFDM) symbol.
- Optionally, any two among "within X", "in X", and "on X" are interchangeable with one another where applicable, wherein X may be one or more carriers (e.g., SL carriers), one or more Bandwidth Parts (BWPs) (e.g., SL BWPs), one or more resource pools (e.g., SL resource pools), one or more links (e.g., uplinks (ULs), downlinks (DLs), or SLs), one or more channels (e.g., a Physical Sidelink Shared Channel (PSSCH)), one or more sub-channels, one or more Resource Block Groups (RBGs), one or more Resource Blocks (RBs), one or more "occasions" (e.g., Physical Downlink Control Channel (PDCCH) monitoring occasions, PSSCH transmission occasions, PSSCH reception occasions, physical sidelink feedback channel (PSFCH) transmission occasions, PSFCH reception occasions, or the like), one or more OFDM symbols, one or more slots, one or more subframes, one or more half-frames, one or more frames, or one or more other time-domain and/or frequency-domain and/or code-domain and/or spatial-domain resources, etc.
- Optionally, higher layer(s) or upper layer(s) may refer to one or more protocol layers or protocol sub-layers above one reference protocol layer (or a reference protocol sub-layer) in one given protocol stack. For example, for a physical layer, a "higher layer" may refer to a Medium Access Control (MAC) layer, a Radio Link Control (RLC) layer, a Packet Data Convergence Protocol (PDCP) layer, a PC5 Radio Resource Control (RRC) layer, a PC5-S layer, an RRC layer, a Vehicle-to-everything (V2X) layer, an application layer, a V2X application layer, or the like. Unless otherwise specified, the reference protocol layer (or the reference protocol sub-layer) refers to a physical layer.
- Optionally, "pre-configure" may be pre-configuration performed in a higher layer (e.g., an RRC layer) protocol, such as pre-configured (for example, pre-configured according to the specification of the higher layer protocol) in a specific storage location in the UE, or pre-configured (for example, pre-configured according to the specification of the higher layer protocol) in a specific storage location that can be accessed by the UE.
- Optionally, "configure" may be configuration performed in a higher layer protocol by means of signaling. For example, configuration is performed for the UE by means of RRC signaling transmitted from the base station to the UE.
- Optionally, one "resource" may correspond to one or more parameters in the time domain (e.g., a starting symbol of the resource, a starting slot of the resource, the number of symbols occupied by the resource, the number of slots occupied by the resource, the symbol in which the resource is located (e.g., when the resource occupies only one symbol), or the slot in which the resource is located (e.g., when the resource occupies only one slot)), and/or one or more parameters in the frequency domain (e.g., a starting sub-channel of the resource, a starting resource block of the resource, a starting subcarrier of the resource, the number of sub-channels occupied by the resource, the number of resource blocks occupied by the resource, or the number of subcarriers occupied by the resource), and/or one or more parameters in the code domain (e.g., a cyclic shift corresponding to the resource or a corresponding cyclic shift index, a cyclic shift pair corresponding to the resource or a corresponding cyclic shift pair index), and/or one or more parameters in the spatial domain (e.g., a layer, or referred to as a Multiple Input Multiple Output (MIMO) layer, corresponding to the resource).
- Optionally, a time-domain resource may also be referred to as a time resource.

- Optionally, a frequency-domain resource may also be referred to as a frequency resource.
- Optionally, a resource block may refer to a Virtual Resource Block (VRB), a Physical Resource Block (PRB), a Common Resource Block (CRB), or a resource block defined in another means.
- Optionally, frequency domain resource numbers (e.g., in ascending order of the frequency) may start from 0. For example, if the number of sub-channels (or subchannels) configured in one resource pool is $N_{subChannel}^{SL}$, then the set of sub-channels in the resource pool may be represented by a set of corresponding sub-channel numbers as $\{0, 1, ..., N_{subChannel}^{SL} - 1\}$. As another example, the set of subcarriers in a resource block may be represented by a set of corresponding subcarrier numbers as {0, 1, ..., 11}.
- Optionally, time domain resource numbers (e.g., in chronological order) may start from 0. For example, for 30 kHz SCS, a set of slots in a subframe may be represented by a set of corresponding slot indexes as {0, 1}.
- Optionally, "SCI" (Sidelink Control Information) may refer to an instance of an SCI format (e.g., a 1st-stage SCI format, or a 2nd-stage SCI format), or a combination of an instance of a 1st-stage SCI format (e.g., SCI format 1-A) and an instance of a corresponding 2nd-stage SCI format (e.g., SCI format 2-A), where applicable. For example, in a received SCI format 1-A, each field corresponds to a determined value. As another example, in an SCI format 1-A for transmission (or, to be transmitted), each field respectively corresponds to one value that has been determined (or is to be determined). As another example, for a received SCI format 1-A and a corresponding SCI format 2-A, each field of the SCI format 1-A respectively corresponds to a determined value, and each field of the SCI format 2-A respectively corresponds to a determined value.
- Optionally, an "SL transmission" may include any one or more among the following where applicable:

  ♦ PSSCH transmission.
  ♦ Physical Sidelink Control Channel (PSCCH) and corresponding (or associated) PSSCH transmission.
  ♦ PSCCH or corresponding (or associated) PSSCH transmission.
  ♦ PSFCH transmission.
  ♦ Sidelink-Synchronization Signal/Physical Sidelink Broadcast Channel (S-SS/PSBCH) transmission (or referred to as S-SSB transmission).

- Optionally, an "SL resource" is a resource that can be used for SL transmission and/or SL reception.
- Optionally, "resource pool" may be replaced with "SL resource pool" where applicable.
- Optionally, "PSSCH transmission" may be replaced with "PSCCH and/or corresponding (or associated) PSSCH transmission" where applicable.
- Optionally, an "SL slot" is a slot that may belong to a certain resource pool, for example, if a set of indexes of all slots (e.g., referred to as "physical slots") in a predefined period (e.g., a System Frame Number (SFN) period, or a Direct Frame Number (DFN) period; e.g., a duration of 10240 milliseconds; e.g., from SFN = 0 to SFN = 1023, or from DFN = 0 to DFN = 1023) is denoted as $T_{all}$ = {0,1, $\cdots$ ,10240 $\times$ $2^{\mu_{SL}}$ - 1} (where $\mu_{SL}$ is a subcarrier spacing configuration of corresponding SL carriers or SL BWPs), then an "SL slot" set (e.g., denoted as $T_{all}^{SL} = \{t_0^{SL}, t_1^{SL}, \cdots, t_{T_{max}-1}^{SL}\}$, where $T_{max}$ is the number of elements in the SL slot set $T_{all}^{SL}$) may be a set of remaining slots after slots in the following sets are excluded from the physical slot set $T_{all}$:

  ♦ S-SSB slot set: a set of slots configured with an S-SSB. The number of slots in the S-SSB slot set is denoted as $N_{S\_SSB}$.

  ♦ Non-SL slot set: slots in which at least one of SL symbols (e.g., $N_{length}^{SL}$ consecutive symbols starting from the symbol $l_{start}^{SL}$, where $l_{start}^{SL}$ and $N_{length}^{SL}$ are respectively configured by parameters *sl-StartSymbol* and *sl-LengthSymbols*) configured in corresponding SL BWPs is not configured to be a UL symbol. The number of slots in the S-SSB slot set is denoted as $N_{nonSL}$.

  ♦ Reserved slot set: slots that remain after the slots in the S-SSB slot set and the slots in the S-SSB slot set are excluded from the physical slot set $T_{all}$ are respectively denoted as $l_0, l_1, \cdots, l_{(10240 \times 2^{\mu} - N_{S_{SSB}} - N_{nonSL} - 1)}$ in ascending order of slot indexes, and if

$$r = \left\lfloor \frac{m \cdot (10240 \times 2^{\mu} - N_{S_{SSB}} - N_{nonSL})}{N_{reserved}} \right\rfloor$$ , then the slot $l_r$ ($0 \le r < 10240 \times 2^{\mu} - N_{S_{SSB}} - N_{nonSL}$) belongs to the reserved slot set, where $m = 0, 1, ..., N_{reserved}-1$, $N_{reserved} = (10240 \times 2^{\mu} - N_{S_{SSB}} - N_{nonSL}) mod L_{bitmap}$, where

$L_{bitmap}$ is the length of a bitmap (e.g., a bitmap for determining which slots in the slot set $T_{all}^{SL}$ belong to a certain resource pool) configured by the higher layer.

- Optionally, an offset between a slot $t_1$ and a slot $t_2$ (or referred to as an offset of the slot $t_2$ relative to the slot $t_1$, or referred to as an offset from the slot $t_1$ to the slot $t_2$) may be denoted as $\Delta(t_1, t_2)$. Optionally, if $\Delta(t_1, t_2) > 0$, then the slot $t_1$ is earlier than the slot $t_2$, and if $\Delta(t_1, t_2) < 0$, then the slot $t_1$ is later than the slot $t_2$. $\Delta(t_1, t_2)$ may be defined in one of the following ways:

    ♦ A physical slot offset. For example, $\Delta(t_1, t_2)$ may be the difference between the index of the slot $t_2$ in the physical slot set $T_{all}$ and the index of the slot $t_1$ in the physical slot set $T_{all}$. The slot $t_1$ and the slot $t_2$ may belong to the same resource pool, belong to two different resource pools, or do not belong to any resource pool, or one among the slot $t_1$ and the slot $t_2$ belongs to a certain resource pool and the other does not belong to any resource pool.
    ♦ An SL slot offset. For example, $\Delta(t_1, t_2)$ may be the difference between the subscript of the slot $t_2$ in the SL slot set $T_{all}^{SL}$ and the subscript of the slot $t_1$ in the SL slot set $T_{all}^{SL}$. The slot $t_1$ and the slot $t_2$ are both "SL slots". The slot $t_1$ and the slot $t_2$ may belong to the same resource pool, belong to two different resource pools, or do not belong to any resource pool, or one among the slot $t_1$ and the slot $t_2$ belongs to a certain resource pool and the other does not belong to any resource pool.
    ♦ A slot offset in a resource pool. For example, if a slot set of a resource pool $u$ in a predefined period (e.g., an SFN period, or a DFN period; e.g., a duration of 10240 milliseconds; e.g., from SFN = 0 to SFN = 1023, or from DFN = 0 to DFN = 1023) is denoted as $T_u^{SL} = \{t'^{SL,u}_0, t'^{SL,u}_1, ..., t'^{SL,u}_{T'^{u}_{max}-1}\}$ , then $\Delta(t_1, t_2)$ may be the difference between the subscript of the slot $t_2$ in the set $T_u^{SL}$ and the subscript of the slot $t_1$ in the set $T_u^{SL}$ , where $T'^{u}_{max}$ is the number of elements in the set $T_u^{SL}$ ; and the slot $t_1$ and the slot $t_2$ both belong to the resource pool $u$.
    ♦ A slot offset in a given slot set. For example, if a slot set in a predefined period (e.g., an SFN period, or a DFN period; e.g., a duration of 10240 milliseconds; e.g., from SFN = 0 to SFN = 1023, or from DFN = 0 to DFN = 1023) is denoted as $T_{any} = \{t^{any}_0, t^{any}_1, ..., t^{any}_{N^T_{anv}-1}\}$ , then $\Delta(t_1, t_2)$ may be the difference between the subscript of the slot $t_2$ in the set $T_{any}$ and the subscript of the slot $t_1$ in the set $T_{any}$, where $N^T_{any}$ is the number of elements in the set $T_{any}$; and the slot $t_1$ and the slot $t_2$ both belong to the set $T_{any}$.

SL communication can support inter-UE coordination functions, e.g., coordination of resource allocation and/or reservation and/or indication between two or more UEs, so as to improve the efficiency of resource allocation and/or reservation and/or indication and/or reduce conflicts in resource allocation and/or reservation and/or indication, etc. Specifically, for example, one UE (e.g., referred to as UE-A) may separately transmit, to one or more other UEs (e.g., referred to as UE-B if only one other UE is present, or referred to as UE-B1, UE-B2, ... if more than one other UE is present), a "coordination information indication", wherein coordination information included therein may explicitly or implicitly indicate (or correspond to, or be associated with) one or more resource sets (e.g., referred to as "coordination resource sets"). One coordination information indication (or one coordination resource set) may correspond to one coordination type (or referred to as a "coordination mode" or a "coordination scheme").

Optionally, a resource in a coordination resource set may be a conflicting resource detected by UE-A, and correspondingly, the coordination information indication may be referred to as a "resource conflict indication" or a "conflict indication". A resource conflict (or referred to as a "conflict") may be related to one or more resources. After UE-A detects the resource conflict, one or more resource conflict indications may be transmitted. A coordination resource set corresponding to each resource conflict indication may include one or more resources related to the resource conflict.

For example, for a resource $R_1$ reserved by UE-$B_1$, a resource $R_2$ reserved by UE-$B_2$, ..., and a resource $R_n$ reserved by UE-$B_n$ that are detected by UE-A, when one or more among the following are satisfied, UE-A may consider that the resource $R_1$, the resource $R_2$, ..., and the resource $R_n$ are conflicting resources:

- Any one resource among the resource $R_1$, the resource $R_2$, ..., and the resource $R_n$ overlaps with one or more resources among the remainder of the resource $R_1$, the resource $R_2$, ..., and the resource $R_n$ in the time domain and/or the frequency domain.
- Any one resource among the resource $R_1$, the resource $R_2$, ..., and the resource $R_n$ overlaps with all of the remaining resources among the resource $R_1$, the resource $R_2$, ..., and the resource $R_n$ in the time domain and/or the frequency domain.
- UE-A is the destination UE of transport blocks to be respectively carried by one or more resources among the resource $R_1$, the resource $R_2$, ..., or the resource $R_n$. For example, UE-A may determine, according to a destination ID and/or a source ID indicated in the SCI that reserved a resource, whether UE-A is the destination UE of a transport block to be carried by said resource.
- UE-A is the destination UE of transport blocks to be respectively carried by all of the resources among the resource $R_1$, the resource $R_2$, ..., and the resource $R_n$.

As another example, if UE-A detects that UE-$B_1$ has reserved the resource $R_1$, and when one or more of the following are satisfied, UE-A may consider that the resource $R_1$ is a conflicting resource:

- UE-A is the destination UE of a transport block to be carried by the resource $R_1$.
- UE-A needs to perform UL transmission on a time resource overlapping with the resource $R_1$, and the priority of the UL transmission is higher than the priority of SL reception on the resource $R_1$.
- Due to UE capability limitations, UE-A cannot perform UL transmission and SL reception at the same time.
- UE-A needs to perform SL transmission on a time resource overlapping with the resource $R_1$, and the priority of the SL transmission is higher than the priority of SL reception on the resource $R_1$.
- Due to UE capability limitations, UE-A cannot perform SL transmission and SL reception at the same time.

Optionally, when UE-A detects that the resource $R_1$ reserved by the UE-$B_1$, the resource $R_2$ reserved by the UE-$B_2$, ..., and the resource $R_n$ reserved by the UE-$B_n$ are conflicting resources, UE-A may transmit a resource conflict indication to one or more among UE-$B_1$, UE-$B_2$, ..., and UE-$B_n$. Optionally, UE-A transmits, on a "resource conflict indication resource" associated with the resource $R_1$, a resource conflict indication to UE-$B_1$, transmits, on a "resource conflict indication resource" associated with the resource $R_2$, a resource conflict indication to UE-$B_2$, ..., and transmits, on a "resource conflict indication resource" associated with the resource $R_n$, a resource conflict indication to UE-$B_n$. Due to reasons such as UE transmission capabilities and/or priority, UE-A may discard one or more resource conflict indications.

Optionally, a resource conflict may be a conflict in a slot that has passed, and corresponding resource conflict detection may be referred to as "post-conflict detection".

Optionally, a resource conflict may be a conflict in a future slot (or be referred to as "a potential conflict" or "an expected conflict"), and corresponding resource conflict detection may be referred to as "pre-conflict detection".

Optionally, a resource conflict may be a conflict of resources in the same resource pool, or in different resource pools (e.g., two different resource pools on an SL carrier or SL BWP), or in two different carriers (e.g., an SL carrier and a UL carrier).

Optionally, a resource in a coordination resource set may be a resource (a preferred resource) that UE-A expects UE-B to use preferentially (correspondingly, the coordination information indication may be referred to as a "preferred resource indication"). For example, UE-A expects UE-B to select (or preferentially select) said resource when UE-B performs resource selection (e.g., resource selection performed for SL transmission from UE-B to UE-A).

Optionally, a resource in a coordination resource set may be a resource (a non-preferred resource) that UE-A does not expect UE-B to use (or, preferentially not to use) (correspondingly, the coordination information indication may be referred to as a "non-preferred resource indication"). For example, UE-A expects UE-B to exclude (or preferentially exclude) said resource when UE-B performs resource selection (e.g., resource selection performed for SL transmission from UE-B to UE-A).

Optionally, the coordination information may be included in control information. The control information may be physical layer control information, or higher layer control information. For example, the coordination information may be included in 1st-stage SCI. As another example, the coordination information may be included in 2nd-stage SCI. As another example, the coordination information may be included in sidelink feedback control information (SFCI). As another example, the coordination information may be included in other control information (e.g., referred to as sidelink coordination control information (SCCI)).

Optionally, the coordination information may be included in higher layer (e.g., the MAC layer, or the RRC layer) signaling. For example, the coordination information may be included in a MAC Control Element (MAC CE). As another example, the coordination information may be included in an RRC message.

Optionally, one coordination information indication may be carried by one physical layer channel (or one transmission of the physical layer channel), or may be carried by one physical layer signal (or one transmission of the physical layer signal). For convenience, the physical layer channel/signal may be referred to as a "Physical Sidelink Coordination Information Channel/Signal" (PSCICHS). Optionally, depending on different coordination types, the PSCICHS may be different physical layer channels or signals. For example, for a preferred resource indication and/or a non-preferred resource indication, the PSCICHS may be a PSCCH, a PSSCH, a PSCCH+PSSCH, a PSFCH, another physical layer channel, or a physical layer signal. For a resource conflict indication, the PSCICHS may be a PSFCH, or another physical layer channel, or a physical layer signal.

Optionally, a resource (e.g., a time domain and/or frequency domain and/or code domain and/or spatial domain resource) occupied by a PSCICHS (or a PSCICHS transmission) may be referred to as a "PSCICHS resource". Optionally, a PSCICHS resource (or a time domain resource corresponding to the PSCICHS resource, e.g., a slot in which the PSCICHS resource is located, or one or more symbols in which the PSCICHS resource is located) may be referred to as a "PSCICHS occasion", a "PSCICHS occasion resource", or a "PSCICHS resource occasion". For a UE transmitting a PSCICHS, a PSCICHS resource (or a time domain resource corresponding to the PSCICHS resource, e.g., a slot in which the PSCICHS resource is located, or one or more symbols in which the PSCICHS resource is located) may be referred to as a "PSCICHS transmission resource", a "PSCICHS transmission occasion", a "PSCICHS transmission occasion resource", or a "PSCICHS transmission resource occasion". For a UE receiving a PSCICHS, a PSCICHS resource (or a time domain resource corresponding to the PSCICHS resource, e.g., a slot in which the PSCICHS resource is located, or one or more symbols in which the PSCICHS resource is located) may be referred to as a "PSCICHS reception resource", a "PSCICHS reception occasion", a "PSCICHS reception occasion resource", or a "PSCICHS reception resource occasion".

Optionally, the PSCICHS resource may be configured in an SL carrier (e.g., configured in an information element *SL-FreqConfigCommon* or configured in an information element *SL-FreqConfig*). There may be zero or one or more "PSCICHS configurations" in one SL carrier.

Optionally, the PSCICHS resource may be configured in an SL BWP (e.g., configured in an information element *SL-BWP-Config* or configured in an information element *SL-BWP-Generic*). There may be zero or one or more PSCICHS configurations in one SL BWP. For each PSCICHS configuration, a PSCICHS resource may occupy one or more sub-channels (or one or more resource blocks) configured in one or more resource pools in the SL BWP, or does not occupy any sub-channel (or any resource block) configured in any resource pool in the SL BWP.

Optionally, the PSCICHS resource may be configured in a resource pool (e.g., configured in an information element *SL-ResourcePool*). There may be zero or one PSCICHS configuration in one resource pool. A PSCICHS resource may occupy one or more sub-channels (or one or more resource blocks) configured in the resource pool, or does not occupy any sub-channel (or any resource block) configured in the resource pool.

Optionally, a PSCICHS configuration corresponding to a PSCICHS transmission and/or a corresponding PSCICHS resource may be determined according to a predefined or configured or pre-configured method. For example, no PSCICHS configuration is present in a resource pool $u_1$, but a PSCICHS configuration is present in a resource pool $u_2$. Correspondingly, the resource pool $u_1$ does not support the coordination information indication (e.g., cannot indicate a resource conflict in the resource pool $u_1$), but the resource pool $u_2$ supports the coordination information indication (e.g., a resource conflict detected in the resource pool $u_2$ may be indicated by one or more PSCICHS transmissions in the resource pool $u_2$). As another example, no PSCICHS configuration is present in the resource pool $u_1$, but a PSCICHS configuration is present in each of the resource pool $u_2$ and a resource pool $u_3$. Correspondingly, coordination information related to the resource pool $u_1$ (e.g., a resource conflict indication corresponding to a resource conflict detected in the resource pool $u_1$) may be predefined or configured or pre-configured to be indicated by means of one or more PSCICHS transmissions in the resource pool $u_2$. Coordination information related to the resource pool $u_2$ (e.g., a resource conflict indication corresponding to a resource conflict detected in the resource pool $u_2$) may be (by default) indicated by means of one or more PSCICHS transmissions in the resource pool $u_2$, or may be predefined or configured or pre-configured to be indicated by means of one or more PSCICHS transmissions in the resource pool $u_3$. As another example, no PSCICHS configuration is present in the resource pool $u_1$, but a PSCICHS configuration is present in an SL BWP in which the resource pool $u_1$ is located. Correspondingly, coordination information related to the resource pool $u_1$ (e.g., a resource conflict indication corresponding to a resource conflict detected in the resource pool $u_1$) may be predefined or configured or pre-configured to be indicated by one or more PSCICHS transmissions in the SL BWP. As another example, coordination information may be defined in an SL BWP (for example, defined across a resource pool, and specifically, for example, a resource conflict may correspond to a conflict between a resource in the resource pool $u_1$ in the SL BWP and a resource in the resource pool $u_2$ in the SL BWP, and for example, the two resources overlap temporally). Correspondingly, coordination information (e.g., a resource conflict indication corresponding to a resource conflict) may be predefined or configured or pre-configured to be indicated by one or more PSCICHS transmissions in the SL BWP.

Optionally, the PSCICHS resource may be determined by means of sensing and/or a resource selection mechanism. For example, a PSCICHS may be a PSCCH and/or a PSSCH.

Optionally, in the time domain, PSCICHS resources may occur periodically. A slot configured with PSCICHS resources may be referred to as a "PSCICHS resource slot" (or referred to as a "PSCICHS slot"). For a PSCICHS configuration, in a predefined period (e.g., an SFN period, or a DFN period; e.g., a duration of 10240 milliseconds; e.g., from SFN = 0 to SFN = 1023, or from DFN = 0 to DFN = 1023), a PSCICHS slot set may be denoted as $T_{RES}^{CI}$. For example, one PSCICHS configuration may include one PSCICHS slot period (e.g., denoted as $N_{RES}^{CI}$, the units being, for example, slots) and one PSCICHS slot offset (e.g., denoted as $O_{RES}^{CI}$, the unit being, for example, slots). $N_{RES}^{CI}$ may be a predefined or configured or pre-configured value, or may be determined by one or more predefined or configured or pre-configured values. $O_{RES}^{CI}$ may be a predefined or configured or pre-configured value, or may be determined by one or more predefined or configured or pre-configured values. Optionally, $N_{RES}^{CI}$ and $O_{RES}^{CI}$ may be defined in the physical slot set $T_{all}$. For example, for $k_1 \in T_{all}$, if $k_1 \bmod N_{RES}^{CI} = O_{RES}^{CI}$, then the slot $k_1$ is a PSCICHS slot. Optionally, $N_{RES}^{CI}$ and $O_{RES}^{CI}$ may be defined in the SL slot set $T_{all}^{SL}$. For example, for $t_{k_2}^{SL} \in T_{all}^{SL}$, if $k_2 \bmod N_{RES}^{CI} = O_{RES}^{CI}$, then the slot $t_{k_2}^{SL}$ is a PSCICHS slot. Optionally, $N_{RES}^{CI}$ and $O_{RES}^{CI}$ may be defined in the slot set $T_u^{SL}$ of the resource pool $u$. For example, for $t'^{SL,u}_{k_3} \in T_u^{SL}$, if $k_3 \bmod N_{RES}^{CI} = O_{RES}^{CI}$, then the slot $t'^{SL,u}_{k_3}$ is a PSCICHS slot.

Optionally, for a PSCICHS configuration, PSCICHS resources may be indexed (or numbered) according to a certain order within a time length $T_{IDX}^{CI,RES}$. For example, a set of PSCICHS resources within the time length $T_{IDX}^{CI,RES}$ may be denoted as $R_{IDX}^{CI,RES} = \{r_0^{CI,RES,IDX}, r_1^{CI,RES,IDX}, \ldots, r_{N_{IDX}^{CI,RES}-1}^{CI,RES,IDX}\}$, where $N_{IDX}^{CI,RES}$ is the number of elements in the set $R_{IDX}^{CI,RES}$, and the index of the PSCICHS resource $r_k^{CI,RES,IDX}$ ($k \in \{0, 1, \ldots, N_{IDX}^{CI,RES} - 1\}$) is $k$. Optionally, the procedure of indexing PSCICHS resources may be a procedure of mapping a time domain index (e.g., a value set thereof is denoted as $\{0, 1, \ldots, N_{time,num}^{CI,RES} - 1\}$), a frequency domain index (e.g., a value set thereof is denoted as $\{0, 1, \ldots, N_{freq,num}^{CI,RES} - 1\}$), and a code domain index (e.g., a value set thereof is denoted as $\{0, 1, \ldots, N_{code,num}^{CI,RES} - 1\}$) of each PSCICHS resource within the time length $T_{IDX}^{CI,RES}$ to the index $k$ of the PSCICHS resource. Reversely, for each PSCICHS resource index $k$, a time domain index (e.g., denoted as $id_t(k)$), a frequency domain index (e.g., denoted as $id_f(k)$), and a code domain index (e.g., denoted as $id_c(k)$) can be determined. Optionally, the time length $T_{IDX}^{CI,RES}$ may occur periodically. Optionally, the time length $T_{IDX}^{CI,RES}$ may be equal to one or more PSCICHS slots, one or more PSCICHS occasions, one or more PSCICHS transmission occasions, one or more PSCICHS reception occasions, one or more physical slots, one or more SL slots, or slots in one or more resource pools.

Optionally, the method for indexing PSCICHS resources may be a "basic PSCICHS resource indexing method", and is, for example, one of the following:

• First the time domain, then the frequency domain, and then the code domain. For example, indexing is performed according to a mapping method shown by an example in Table 1, that is, arranging the time domain indexes in ascending order, then arranging the frequency domain indexes in ascending order, and then arranging the code domain indexes in ascending order (assuming that $N_{time,num}^{CI,RES} = 2$, $N_{freq,num}^{CI,RES} = 2$, $N_{code,num}^{CI,RES} = 2$).

Optionally, if $N_{time,num}^{CI,RES} = 1$, then the indexing method may be simply referred to as "first the frequency domain, and then the code domain". If $N_{freq,num}^{CI,RES} = 1$, then the indexing method may be simply referred to as "first the time domain, and then the code domain". If $N_{code,num}^{CI,RES} = 1$, then the

indexing method may be simply referred to as "first the time domain, and then the frequency domain".

Table 1: Example of mapping by means of first the time domain, then the frequency domain, and then the code domain

| PSCICHS Resource Index | Time Domain Index | Frequency Domain Index | Code Domain Index |
|---|---|---|---|
| 0 | 0 | 0 | 0 |
| 1 | 1 | 0 | 0 |
| 2 | 0 | 1 | 0 |
| 3 | 1 | 1 | 0 |
| 4 | 0 | 0 | 1 |
| 5 | 1 | 0 | 1 |
| 6 | 0 | 1 | 1 |
| 7 | 1 | 1 | 1 |

- First the time domain, then the code domain, and then the frequency domain.
- First the frequency domain, then the time domain, and then the code domain.
- First the frequency domain, then the code domain, and then the time domain.
- First the code domain, then the time domain, and then the frequency domain.
- First the code domain, then the frequency domain, and then the time domain.

Optionally, the method for indexing PSCICHS resources may be a "combined PSCICHS resource indexing method", and is, for example, one of the following:

- Frequency domain combination. For example, one or more (e.g., denoted as $N_{freq,set}^{CI,RES}$, where $N_{freq,set}^{CI,RES} \geq 1$) frequency domain PSCICHS resource sets (e.g., each frequency domain PSCICHS resource set is represented by a resource block set or a sub-channel set) may be configured, and PSCICHS resources in each frequency domain PSCICHS resource set are indexed sequentially (e.g., in ascending order of frequencies) according to a predefined or configured or pre-configured "basic PSCICHS resource indexing method". For $n \in \{1, \dots, N_{freq,set}^{CI,RES} - 1\}$, the first PSCICHS resource index in the (n+1)-th frequency domain PSCICHS resource set (i.e., the smallest PSCICHS resource index in the frequency domain PSCICHS resource set) is equal to the last PSCICHS resource index in the n-th frequency domain PSCICHS resource set (i.e., the greatest PSCICHS resource index in the frequency domain PSCICHS resource set) plus 1. For example, if $N_{freq,set}^{CI,RES} = 2$, and value sets of the time domain index, the frequency domain index, and the code domain index corresponding to the first frequency domain PSCICHS resource set are respectively

$$\{0, 1, \cdots\cdots, N_{time,num,0}^{CI,RES} - 1\}, \{0, 1, \cdots\cdots, N_{freq,num,0}^{CI,RES} - 1\}, \{0, 1, \cdots\cdots, N_{code,num,0}^{CI,RES} - 1\}$$

, and value sets of the time domain index, the frequency domain index, and the code domain index corresponding to the second frequency domain PSCICHS resource set are respectively $\{0, 1, \cdots\cdots, N_{time,num,1}^{CI,RES} - 1\}$, $\{0, 1, \dots\dots, N_{freq,num,1}^{CI,RES} - 1\}$, $\{0, 1, \cdots\cdots, N_{code,num,1}^{CI,RES} - 1\}$, then the PSCICHS resources in the first frequency domain PSCICHS resource set are respectively indexed as 0, 1, $\cdots\cdots$, $N_{time,num,0}^{CI,RES} \cdot N_{freq,num,0}^{CI,RES} \cdot N_{code,num,0}^{CI,RES} - 1$, and then the PSCICHS resources in the second frequency domain PSCICHS resource set are respectively indexed as $N_{time,num,0}^{CI,RES} \cdot$

$N_{freq,num,0}^{CI,RES} \cdot N_{code,num,0}^{CI,RES}$, $N_{time,num,0}^{CI,RES} \cdot N_{freq,num,0}^{CI,RES} \cdot N_{code,num,0}^{CI,RES} + 1$, ... ...,

$N_{time,num,0}^{CI,RES} \cdot N_{freq,num,0}^{CI,RES} \cdot N_{code,num,0}^{CI,RES} + N_{time,num,1}^{CI,RES} \cdot N_{freq,num,1}^{CI,RES} \cdot N_{code,num,1}^{CI,RES} - 1$.

- Time domain combination. For example, one or more (e.g., denoted as $N_{time,set}^{CI,RES}$, where $N_{time,set}^{CI,RES} \geq 1$) time domain PSCICHS resource sets (e.g., each element in each time domain PSCICHS resource set corresponds to one or more symbols or one or more slots) may be configured within the time length $T_{IDX}^{CI,RES}$, and PSCICHS resources in each time domain PSCICHS resource set are indexed sequentially (e.g., in chronological order) according to a predefined or configured or pre-configured "basic PSCICHS resource indexing method". For $n \in \{1, ..., N_{time,set}^{CI,RES} - 1\}$, the first PSCICHS resource index in the (n+1)-th time domain PSCICHS resource set (i.e., the smallest PSCICHS resource index in the time domain PSCICHS resource set) is equal to the last PSCICHS resource index in the n-th time domain PSCICHS resource set (i.e., the greatest PSCICHS resource index in the time domain PSCICHS resource set) plus 1. For example, if $N_{time,set}^{CI,RES} = 2$, and value sets of the time domain index, the frequency domain index, and the code domain index corresponding to the first time domain PSCICHS resource set are respectively {0, 1, ... ...,

$N_{time,num,0}^{CI,RES} - 1$}、{0, 1, ......, $N_{freq,num,0}^{CI,RES} - 1$}、{0, 1, ......,$N_{code,num,0}^{CI,RES} - 1$}, and value sets of the time domain index, the frequency domain index, and the code domain index corresponding to the second time domain PSCICHS resource set are respectively {0, 1, ... ...,$N_{time,num,1}^{CI,RES} - 1$}、{0, 1, ......, $N_{freq,num,1}^{CI,RES} - 1$}, {0, 1, ... ...,

$N_{code,num,1}^{CI,RES} - 1$}, then the PSCICHS resources in the first time domain PSCICHS resource set are respectively indexed as 0, 1, ... ..., $N_{time,num,0}^{CI,RES} \cdot N_{freq,num,0}^{CI,RES} \cdot N_{code,num,0}^{CI,RES} - 1$, and then the PSCICHS resources in the second time domain PSCICHS resource set are respectively indexed as $N_{time,num,0}^{CI,RES} \cdot N_{freq,num,0}^{CI,RES} \cdot N_{code,num,0}^{CI,RES}$,

$N_{time,num,0}^{CI,RES} \cdot N_{freq,num,0}^{CI,RES} \cdot N_{code,num,0}^{CI,RES} + 1$, ... ..., $N_{time,num,0}^{CI,RES} \cdot$

$N_{freq,num,0}^{CI,RES} \cdot N_{code,num,0}^{CI,RES} + N_{time,num,1}^{CI,RES} \cdot N_{freq,num,1}^{CI,RES} \cdot N_{code,num,1}^{CI,RES} - 1$.

Optionally, in the time domain, the size of a PSCICHS resource (e.g., denoted as $N_{time,size}^{CI,RES}$ representing, e.g., $N_{time,size}^{CI,RES}$ symbols) may be a predefined or configured or pre-configured value, or may be determined by one or more predefined or configured or pre-configured values. For example, $N_{time,size}^{CI,RES} = 1$ symbol or $N_{time,size}^{CI,RES} = 2$ symbols or $N_{time,size}^{CI,RES} = 3$ symbols. Optionally, one PSCICHS resource may occupy $N_{time,size}^{CI,RES}$ consecutive symbols (e.g., respectively denoted as PSCICHS symbol 0, PSCICHS symbol 1, ..., and PSCICHS symbol $N_{time,size}^{CI,RES} - 1$). Optionally, PSCICHS symbol $N_{time,size}^{CI,RES} - 1$ may be used as a transmission gap, that is, a corresponding PSCICHS transmission does not occupy PSCICHS symbol $N_{time,size}^{CI,RES} - 1$. Optionally, PSCICHS symbol 0 may be used for automatic gain control (AGC). Optionally, in a PSCICHS transmission, resource elements in a predefined PSCICHS symbol (e.g., PSCICHS symbol $N_{time,size}^{CI,RES} - 2$) are copied to another PSCICHS symbol except PSCICHS symbol $N_{time,size}^{CI,RES} - 1$.

Optionally, in the time domain, $N_{time,num}^{CI,RES}$ (or $N_{time,num,0}^{CI,RES}$, or $N_{time,num,1}^{CI,RES}$, ...) may be a predefined or configured or pre-configured value (e.g., $N_{time,num}^{CI,RES} = 1$ or $N_{time,num}^{CI,RES} = 2$ or $N_{time,num}^{CI,RES} = 3$), or may be determined by one or more predefined or configured or pre-configured values.

Optionally, in the frequency domain, the size of a PSCICHS resource (e.g., denoted as $N_{freq,size}^{CI,RES}$ representing, e.g., $N_{freq,size}^{CI,RES}$ subcarriers, or $N_{freq,size}^{CI,RES}$ resource blocks, or $N_{freq,size}^{CI,RES}$ resource block groups, or $N_{freq,size}^{CI,RES}$ sub-channels) may be a predefined or configured or pre-configured value, or may be determined by one or more predefined or configured or pre-configured values. For example, $N_{freq,size}^{CI,RES} = 1$ resource block. Optionally, one PSCICHS resource may occupy $N_{freq,size}^{CI,RES}$ consecutive subcarriers, or $N_{freq,size}^{CI,RES}$ consecutive resource blocks, or $N_{freq,size}^{CI,RES}$ consecutive resource block groups, or $N_{freq,size}^{CI,RES}$ consecutive sub-channels.

Optionally, in the frequency domain, $N_{freq,num}^{CI,RES}$ (or $N_{freq,num,0}^{CI,RES}$, or $N_{freq,num,1}^{CI,RES}$, ...) may be a predefined or configured or pre-configured value, or may be determined by one or more predefined or configured or pre-configured values.

Optionally, in the code domain, one PSCICHS resource may correspond to one cyclic shift, denoted, for example, as $\alpha$. Specifically, for example, the cyclic shift corresponding to the PSCICHS resource $r_k^{CI,RES,IDX}$ ($k \in \{0, 1, ..., N_{IDX}^{CI,RES} - 1\}$) may be denoted as $\alpha^k$. The cyclic shift $\alpha^k$ may be used to determine a sequence corresponding to a PSCICHS transmission on the PSCICHS resource. For example, the sequence may be acquired by performing a corresponding cyclic shift on a base sequence, and is used to represent a value indicated in coordination information carried by the PSCICHS transmission. The base sequence may be determined according to a predefined and/or configured and/or pre-configured method. Optionally, the value indicated in the coordination information carried by the PSCICHS transmission may be determined according to a predefined or configured or pre-configured method, and for example, may be configured or pre-configured to be "resource conflict detected" or may be configured or pre-configured to be "no resource conflict detected". Optionally, a cyclic shift may be represented by an index thereof in a set. For example, if the number of code domain PSCICHS resources multiplexed on a time-frequency resource having a time domain size of $N_{time,size}^{CI,RES}$ and a frequency domain size of $N_{freq,size}^{CI,RES}$ is six, and if each code domain PSCICHS resource corresponds to one cyclic shift, then corresponding cyclic shift indexes may be respectively 0, 1, ..., and 5.

Optionally, in the code domain, one PSCICHS resource may correspond to one cyclic shift pair including two cyclic shifts, for example, respectively referred to as a first cyclic shift and a second cyclic shift. Specifically, for example, the cyclic shift pair corresponding to the PSCICHS resource $r_k^{CI,RES,IDX}$ ($k \in \{0, 1, ..., N_{IDX}^{CI,RES} - 1\}$) may be denoted as ($\alpha^{k,0}$, $\alpha^{k,1}$), where $\alpha^{k,0}$ and $\alpha^{k,1}$ are respectively the first cyclic shift and the second cyclic shift. Each cyclic shift in the cyclic shift pair ($\alpha^{k,0}$, $\alpha^{k,1}$) may be used to determine a sequence corresponding to a PSCICHS transmission on the PSCICHS resource. For example, a first sequence acquired by performing the first cyclic shift on a base sequence is used to indicate a value, and a second sequence acquired by performing the second cyclic shift on the base sequence is used to indicate another value. The base sequence may be determined according to a predefined and/or configured and/or pre-configured method. Specifically, for example, two cyclic shifts in one cyclic shift pair are respectively used to indicate "resource conflict detected" and "no resource conflict detected". As another example, two cyclic shifts in one cyclic shift pair are respectively used to indicate two different resource conflict types, e.g., "time-frequency resource overlapping" and "half-duplex conflict". As another example, in one cyclic shift pair, one cyclic shift is used to indicate "resource conflict detected", and the other cyclic shift does not indicate any value. As another example, in one cyclic shift pair, one cyclic shift is used to indicate "no resource conflict detected", and the other cyclic shift does not indicate any value. A cyclic shift pair may be represented by an index thereof in a set. For example, if the number of code domain PSCICHS resources multiplexed on a time-frequency resource having a time domain size of $N_{time,size}^{CI,RES}$ and a frequency domain size of $N_{freq,size}^{CI,RES}$ is six, and if each code domain PSCICHS resource corresponds to one cyclic shift pair, then corresponding cyclic shift pair indexes may be respectively 0, 1, ..., and 5.

Optionally, in the code domain, whether one PSCICHS resource corresponds to one cyclic shift or one cyclic shift pair may be determined by means of a predefined or configured or pre-configured method.

Optionally, in the code domain, $N_{code,num}^{CI,RES}$ may be the number of code domain PSCICHS resources multiplexed on a time-frequency resource having a time domain size of $N_{time,size}^{CI,RES}$ and a frequency domain size of $N_{freq,size}^{CI,RES}$. Optionally, $N_{code,num}^{CI,RES}$ may be a predefined or configured or pre-configured value, or may be determined by one or more predefined or configured or pre-configured values. For example, $N_{code,num}^{CI,RES} = 2$. As another example, $N_{code,num}^{CI,RES} = 4$. As another example, $N_{code,num}^{CI,RES} = 6$. As another example, $N_{code,num}^{CI,RES} = 8$. As another example, $N_{code,num}^{CI,RES} = 10$. As another example, $N_{code,num}^{CI,RES} = 12$. As another example, $N_{code,num}^{CI,RES} = 1$. As another example, $N_{code,num}^{CI,RES} = 3$. As another example, $N_{code,num}^{CI,RES} = 5$. Optionally, $N_{code,num}^{CI,RES}$ may represent the number of cyclic shifts, and correspondingly, the code domain index refers to a cyclic shift index. Optionally, $N_{code,num}^{CI,RES}$ may represent the number of cyclic shift pairs, and correspondingly, the code domain index refers to a cyclic shift pair index.

Optionally, due to limitations on the number of PSCICHS resources, two or more PSCICHS transmissions triggered by the same or different resource conflicts may correspond to the same PSCICHS resource $r_k^{CI,RES,IDX}$.

Optionally, one PSCICHS transmission and one PSFCH transmission may correspond to the same base sequence but different cyclic shifts.

Optionally, one PSCICHS transmission and one PSFCH transmission may correspond to different base sequences.

Optionally, one or more PSCICHS transmissions and one or more PSFCH transmissions may be multiplexed on the same time-frequency resource (e.g., a time-frequency resource having a time domain size of $N_{time,size}^{CI,RES}$ and a frequency domain size of $N_{freq,size}^{CI,RES}$).

Optionally, one PSCICHS resource and one PSFCH resource may correspond to the same time-frequency resource (e.g., a time-frequency resource having a time domain size of $N_{time,size}^{CI,RES}$ and a frequency domain size of $N_{freq,size}^{CI,RES}$) and the same base sequence, but different cyclic shift pairs.

Optionally, one PSCICHS resource and one PSFCH resource may correspond to the same time-frequency resource (e.g., a time-frequency resource having a time domain size of $N_{time,size}^{CI,RES}$ and a frequency domain size of $N_{freq,size}^{CI,RES}$) and the same base sequence, but a cyclic shift corresponding to the PSCICHS resource is not equal to either cyclic shift in a cyclic shift pair corresponding to the PSFCH resource.

Optionally, a sequence corresponding to a PSCICHS transmission may be denoted as $x(n) = r_{u,v}^{\alpha,\delta}(n)$ or $x(n) = r_{u,v}^{(\alpha,\delta)}(n)$, where

- n = 0, 1, ..., $M_{ZC}$ - 1. $M_{ZC}$ may be equal to $mN_{sc}^{RB}/2^{\delta}$. $N_{sc}^{RB}$ may represent the number of subcarriers of each resource block, e.g., $N_{\mathrm{sc}}^{\mathrm{RB}} = 12$ ; $m$ may be an integer; and $\delta$ may be equal to 0. For example, $M_{ZC}$ may be equal to $N_{\mathrm{sc}}^{\mathrm{RB}}$ .

- $r_{u,v}^{(\alpha,\delta)}(n)$ may be equal to $e^{j\alpha n}\bar{r}_{u,v}(n)$ . The base sequence $\bar{r}_{u,v}(n)$ may be divided into one or more groups, where $u$ may be the index of the group, v may be the index of the base sequence in the group, and $\alpha$ may represent the cyclic shift. Optionally, v may be equal to 0, indicating that each group includes one base sequence. Optionally, $\bar{r}_{u,v}(n)$ may be equal to $e^{j\varphi(n)\pi/4}$ (for example, when $M_{ZC} = N_{\mathrm{sc}}^{\mathrm{RB}}$ ), where $\varphi(n)$ may be a predefined sequence related to $u$. Optionally, the definition of $\varphi(n)$ may be the same as the definition of a corresponding sequence $q(n)$ in NR PUCCH format 0. Optionally, the definition of $\varphi(n)$ may be the same as the definition of a corresponding sequence $\varphi(n)$ in a PSFCH. For example, for $u = 0$, the sequence is {-3, 1, -3, -3, -3, 3, -3, -1, 1, 1, 1, -3}. As another example, for $u = 1$, the sequence is {-3, 3, 1, -3, 1, 3, -1, -1, 1, 3, 3, 3}.

- $u$ may be a predefined or configured or pre-configured value (e.g., $u = 0$).

- $u$ may be determined by one or more predefined or configured or pre-configured values. For example, $u = n_{HopID}^{PSCICHS} \bmod N_{base}^{sequence}$ , where $n_{HopID}^{PSCICHS}$ may be a predefined or configured or pre-configured value, or may be determined by one or more predefined or configured or pre-configured values, and $N_{base}^{sequence}$ may be a predefined or configured or pre-configured value (e.g., $N_{base}^{sequence} = 30$ ), or may be determined by one or more predefined or configured or pre-configured values. $n_{HopID}^{PSCICHS}$ may or may not be equal to a corresponding value configured for the PSFCH.

- $\alpha$ may be a function of the slot index and/or the symbol index. For example, $\alpha$ may be equal to $\alpha_l$, and

$$\alpha_l = \frac{2\pi}{N_{\mathrm{sc}}^{\mathrm{RB}}}\left(\left(m_0 + m_{\mathrm{cs}} + m_{\mathrm{int}} + n_{\mathrm{cs}}\left(n_{\mathrm{s,f}}^{\mu}, l + l'\right)\right) \bmod N_{\mathrm{sc}}^{\mathrm{RB}}\right)$$ , where

  ♦ $m_{\mathrm{int}}$ may be equal to 0.
  ♦ $m_0$ may be a predefined or configured or pre-configured value, or may be determined by one or more predefined or configured or pre-configured values.
  ♦ $m_{cs}$ may be a predefined or configured or pre-configured value, or may be determined by one or more predefined or configured or pre-configured values.
  ♦ I may be equal to 0.
  ♦ $l'$ may be the index of a predefined symbol of a corresponding PSCICHS transmission in a slot.

Optionally, for the PSCICHS resource $r_k^{\mathrm{CI,RES,IDX}}$ ( $k \in \{0, 1, \dots, N_{IDX}^{CI,RES} - 1\}$ ) , the parameter $m_0$ and the parameter $m_{cs}$ for calculating the cyclic shift $\alpha^k$ may be respectively denoted as $m_0^k$ and $m_{cs}^k$ .

Optionally, for the PSCICHS resource $r_k^{\mathrm{CI,RES,IDX}}$ ( $k \in \{0, 1, \dots, N_{IDX}^{CI,RES} - 1\}$ ) , the parameter $m_0$ and the parameter $m_{cs}$ for calculating the first cyclic shift $\alpha^{k,0}$ may be respectively denoted as $m_0^{k,0}$ and $m_{cs}^{k,0}$ and the parameter $m_0$ and the parameter $m_{cs}$ for calculating the second cyclic shift $\alpha^{k,1}$ may be respectively denoted as $m_0^{k,1}$ and $m_{cs}^{k,1}$ .

Optionally, for the PSCICHS resource $r_k^{\mathrm{CI,RES,IDX}}$ ( $k \in \{0, 1, \dots, N_{IDX}^{CI,RES} - 1\}$ ), $m_0^{k,0}$ is equal to $m_0^{k,1}$ . In this case, optionally, $m_0^k$ may be used to represent $m_0^{k,0}$ (or $m_0^{k,1}$ ).

Optionally, for the PSCICHS resource $r_k^{\mathrm{CI,RES,IDX}}$ ( $k \in \{0, 1, \dots, N_{IDX}^{CI,RES} - 1\}$ ) , $m_{cs}^{k,0}$ is equal to $m_{cs}^{k,1}$

. In this case, optionally, $m_{cs}^{k}$ may be used to represent $m_{cs}^{k,0}$ (or $m_{cs}^{k,1}$).

Optionally, one resource conflict may be associated with one priority. The priority may be indicated by a priority value. For example, a value set of the priority value may be {0, 1, ..., 7}. As another example, the value set of the priority value may be {1, 2, ..., 8}. Optionally, a greater priority value indicates a lower priority (or "priority order"). Alternatively, a smaller priority value indicates a lower priority (or "priority order").

Optionally, one PSCICHS transmission may be associated with one priority. The priority may be indicated by a priority value. For example, a value set of the priority value may be {0, 1, ..., 7}. As another example, the value set of the priority value may be {1, 2, ..., 8}. Optionally, a greater priority value indicates a lower priority (or "priority order"). Alternatively, a smaller priority value indicates a lower priority (or "priority order"). Optionally, when no confusion is caused, the priority of a PSCICHS transmission may be referred to as the priority of a PSCICHS.

Optionally, one PSCICHS reception may be associated with one priority. The priority may be indicated by a priority value. For example, a value set of the priority value may be {0, 1, ..., 7}. As another example, the value set of the priority value may be {1, 2, ..., 8}. Optionally, a greater priority value indicates a lower priority (or "priority order"). Alternatively, a smaller priority value indicates a lower priority (or "priority order"). Optionally, when no confusion is caused, the priority of a PSCICHS reception may be referred to as the priority of a PSCICHS.

Optionally, the definition method of the priority associated with the PSCICHS transmission and the definition method of the priority associated with the PSCICHS reception may be the same. For example, the value range of the priority of one PSCICHS transmission and the value range of the priority of one PSCICHS reception may be the same, and may be compared to each other (e.g., due to UE capability limitations, when only one operation among a PSCICHS transmission and a PSCICHS reception can be performed, the operation having the higher priority is performed). Optionally, the definition method of the priority associated with the PSCICHS transmission and the definition method of the priority associated with the PSCICHS reception may be different from each other.

Optionally, the determination method of the priority value corresponding to the priority associated with the PSCICHS transmission and the determination method of the priority value corresponding to the priority associated with the PSCICHS reception may be the same or different from each other.

Optionally, a coordination information indication may be transmitted and/or received only when an inter-UE coordination function is activated. Methods of activating (or deactivating) the inter-UE coordination function may include a semi-persistent method (e.g., configured or pre-configured by means of a higher layer protocol) and/or a dynamic method (e.g., indicated in SCI). For example, if UE-A is not configured to activate the inter-UE coordination function, then UE-A does not transmit or receive a coordination information indication. As another example, if UE-A has been configured to activate the inter-UE coordination function, and UE-A detects a resource conflict between a resource $R_1$ reserved by $SCI_1$ and a resource $R_2$ reserved by $SCI_2$, and "coordination enable" is indicated in $SCI_1$ while "coordination enable" is not indicated in $SCI_2$ (or, "coordination disable" is indicated in $SCI_2$), then UE-A may transmit a coordination information indication associated with $SCI_1$ (or Ri), but does not transmit a coordination information indication associated with $SCI_2$ (or $R_2$).

Optionally, a coordination information indication may be triggered according to one or more predefined or configured or pre-configured conditions by a UE transmitting the coordination information.

Optionally, a coordination information indication may be triggered by a "coordination request indication". For example, UE-B transmits a coordination request indication (e.g., which may include a coordination type indication, e.g., a "conflict indication request") to UE-A, and as a response, UE-A may detect whether a resource conflict occurs between UE-B and other UEs (e.g., including UE-A or not including UE-A), and include a detection result in a coordination information indication and transmit the same to UE-B.

Optionally, the coordination request may be included in control information. The control information may be physical layer control information, or higher layer control information. For example, the coordination request may be included in 1st-stage SCI. As another example, the coordination request may be included in 2nd-stage SCI. As another example, the coordination request may be included in SFCI. As another example, the coordination request may be included in other control information (e.g., in SCCI).

Optionally, the coordination request may be included in higher layer (e.g., the MAC layer, or the RRC layer) signaling. For example, the coordination request may be included in a MAC CE. As another example, the coordination request may be included in an RRC message.

Optionally, a coordination request indication may be carried by one physical layer channel (or one transmission of the physical layer channel), or may be carried by one physical layer signal (or one transmission of the physical layer signal). For convenience, the physical layer channel/signal may be referred to as a "Physical Sidelink Coordination Request Channel/Signal" (PSCRCHS). Optionally, depending on different coordination types, the PSCRCHS may be different physical layer channels or signals. For example, for a preferred resource indication and/or a non-preferred resource indication, the PSCRCHS may be a PSCCH, a PSSCH, a PSCCH+PSSCH, a PSFCH, another physical layer channel, or a physical layer signal. For a resource conflict indication, the PSCRCHS may be a PSFCH, another physical layer channel, or a physical layer signal.

Optionally, a resource (such as a time-domain and/or frequency-domain and/or code-domain and/or spatial-domain resource) occupied by a PSCRCHS (or a PSCRCHS transmission) may be referred to as a "PSCRCHS resource". Optionally, a PSCRCHS resource (or a time domain resource corresponding to the PSCRCHS resource, e.g., a slot in which the PSCRCHS resource is located, or one or more symbols in which the PSCRCHS resource is located) may be referred to as a "PSCRCHS occasion", a "PSCRCHS occasion resource", or a "PSCRCHS resource occasion". For a UE transmitting a PSCRCHS, a PSCRCHS resource (or a time domain resource corresponding to the PSCRCHS resource, e.g., a slot in which the PSCRCHS resource is located, or one or more symbols in which the PSCRCHS resource is located) may be referred to as a "PSCRCHS transmission resource", a "PSCRCHS transmission occasion", a "PSCRCHS transmission occasion resource", or a "PSCRCHS transmission resource occasion". For a UE receiving a PSCRCHS, a PSCRCHS resource (or a time domain resource corresponding to the PSCRCHS resource, e.g., a slot in which the PSCRCHS resource is located, or one or more symbols in which the PSCRCHS resource is located) may be referred to as a "PSCRCHS reception resource", a "PSCRCHS reception occasion", a "PSCRCHS reception occasion resource", or a "PSCRCHS reception resource occasion".

Optionally, the PSCRCHS resource may be configured in an SL carrier (e.g., configured in an information element *SL-FreqConfigCommon* or configured in an information element *SL-FreqConfig*). There may be zero or one or more "PSCRCHS configurations" in one SL carrier.

Optionally, the PSCRCHS resource may be configured in an SL BWP (e.g., configured in an information element *SL-BWP-Config* or configured in an information element *SL-BWP-Generic*). There may be zero or one or more "PSCRCHS configurations" in one SL BWP. For each PSCRCHS configuration, the PSCRCHS resource may occupy one or more sub-channels (or one or more resource blocks) configured in one or more resource pools in the SL BWP, or does not occupy any sub-channel (or any resource block) configured in any resource pool in the SL BWP.

Optionally, the PSCRCHS resource may be configured in a resource pool (e.g., configured in an information element *SL-ResourcePool*). There may be zero or one PSCRCHS configuration in one resource pool. The PSCRCHS resource may occupy one or more sub-channels (or one or more resource blocks) configured in the resource pool, or does not occupy any sub-channel (or any resource block) configured in the resource pool.

Optionally, the PSCRCHS resource may be determined by means of sensing and/or a resource selection mechanism. For example, a PSCRCHS may be a PSCCH and/or a PSSCH.

Optionally, in the time domain, PSCRCHS resources may occur periodically.

Optionally, in the time domain, the size of a PSCRCHS resource may be a predefined or configured or pre-configured value, or may be determined by one or more predefined or configured or pre-configured values.

Optionally, in the time domain, one or more PSCRCHS resources may be present in one PSCRCHS slot.

Optionally, in the frequency domain, the size of a PSCRCHS resource may be a predefined or configured or pre-configured value, or may be determined by one or more predefined or configured or pre-configured values.

Optionally, in the code domain, one PSCRCHS resource may correspond to one cyclic shift or an index of the cyclic shift. The cyclic shift may be used to determine a sequence corresponding to a PSCRCHS transmission on the PSCRCHS resource. For example, the sequence may be acquired by performing a corresponding cyclic shift on a predefined or configured or pre-configured base sequence, and is used to represent a value indicated in coordination information carried in the PSCRCHS transmission.

Optionally, in the code domain, one PSCRCHS resource may correspond to one cyclic shift pair or an index of the cyclic shift pair. The cyclic shift pair may correspond to two cyclic shifts (e.g., 0 and 6). Each cyclic shift may be used to determine a sequence corresponding to a PSCRCHS transmission on the PSCRCHS resource. For example, each sequence may be acquired by performing a corresponding cyclic shift on a predefined or configured or pre-configured base sequence, and is used to represent a value indicated in coordination information carried in the PSCRCHS transmission. Optionally, one of two cyclic shifts corresponding to one cyclic shift pair is used to represent a value indicated in coordination information carried in the PSCRCHS transmission, and the other does not indicate any value.

Optionally, one or more PSCRCHS transmissions and one or more PSFCH transmissions may be multiplexed on the same time-frequency resource (e.g., the same resource block in the same symbol).

Optionally, one PSCRCHS resource and one PSFCH resource may correspond to the same time-frequency resource (e.g., the same resource block in the same symbol) but different cyclic shift pairs.

Optionally, one PSCRCHS resource and one PSFCH resource may correspond to the same time-frequency resource (e.g., the same resource block in the same symbol), but a cyclic shift corresponding to the PSCRCHS resource is not equal to either cyclic shift in a cyclic shift pair corresponding to the PSFCH resource.

Optionally, one PSCRCHS transmission and one PSFCH transmission may correspond to the same base sequence but different cyclic shifts.

Optionally, one PSCRCHS transmission and one PSFCH transmission may correspond to different base sequences.

[Embodiment 1]

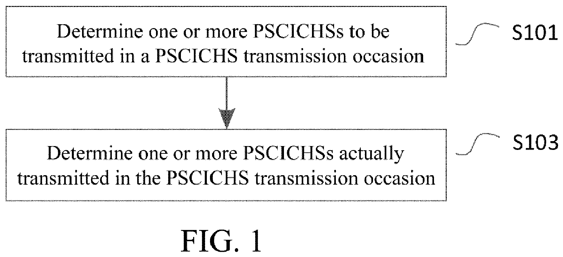

A method performed by a user equipment according to Embodiment 1 of the present invention will be described below with reference to FIG. 1.

FIG. 1 is a flowchart showing a method performed by a user equipment according to Embodiment 1 of the present invention.

As shown in FIG. 1, in Embodiment 1 of the present invention, the steps performed by the user equipment (UE) include: step S101 and step S103.

Specifically, in step S101, one or more PSCICHSs to be transmitted in a PSCICHS transmission occasion are determined. For example, the one or more PSCICHSs are denoted as a PSCICHS set $CHS_{PSCICHS}^{SCH,TX}$, and correspondingly, the number of elements in the set $CHS_{PSCICHS}^{SCH,TX}$ is denoted as $N_{PSCICHS}^{SCH,TX}$.

Optionally, the PSCICHS transmission occasion may correspond to a time domain resource, e.g., a slot (e.g., denoted as $t_{y_c}^{SL}$) or one or more symbols in the slot $t_{y_c}^{SL}$.

Optionally, a PSCICHS "to be transmitted" may be a "scheduled PSCICHS" or a "triggered PSCICHS". For example, a scheduled PSCICHS may be a PSCICHS triggered by a resource conflict detected before (e.g., several slots prior to) the PSCICHS transmission occasion and corresponding to a PSCICHS resource on the PSCICHS transmission occasion.

Optionally, the PSCICHS in the set $CHS_{PSCICHS}^{SCH,TX}$ is triggered by $N_{conflict}^{SL,det}$ resource conflicts (e.g., respectively denoted as $c_0^{SL}$, $c_1^{SL}$, ......, $c_{N_{conflict}^{SL,det}-1}^{SL}$), where $N_{conflict}^{SL,det} \geq 1$. For example, for $i \in \left\{0, 1, ..., N_{conflict}^{SL,det} - 1\right\}$, the resource conflict $c_i^{SL}$ triggers $N_i^{SL,det,conflict}$ PSCICHSs (e.g., denoted as a set $CHS_{PSCICHS,i}^{SCH,TX} = \{chs_{i,0}^{SCH,TX,PSCICHS}, chs_{i,1}^{SCH,TX,PSCICHS}, ......, chs_{i,N_i^{SL,det,conflict}-1}^{SCH,TX,PSCICHS}\})$, where $N_i^{SL,det,conflict} \geq 1$. $N_{PSCICHS}^{SCH,TX}$ may be equal to $\sum_{i=0}^{N_{conflict}^{SL,det}-1} N_i^{SL,det,conflict}$.

Optionally, for $i \in \left\{0, 1, ..., N_{conflict}^{SL,det} - 1\right\}, j \in \left\{0, 1, ..., N_i^{SL,det,conflict} - 1\right\}$, $chs_{i,j}^{SCH,TX,PSCICHS}$ corresponds to a resource (e.g., denoted as $R_{i,j}^{SL,conflict}$) related to the resource conflict $c_i^{SL}$, or $chs_{i,j}^{SCH,TX,PSCICHS}$ corresponds to the SCI (e.g., denoted as $SCI_{i,j}^{SL,conflict}$) that reserved the resource $R_{i,j}^{SL,conflict}$.

In addition, in step S103, one or more PSCICHSs actually transmitted in the PSCICHS transmission occasion are determined (the one or more PSCICHSs are, for example, denoted as a PSCICHS set $CHS_{PSCICHS}^{FINAL,TX}$, and correspondingly, the number of elements in the set $CHS_{PSCICHS}^{FINAL,TX}$ may be denoted as $N_{PSCICHS}^{FINAL,TX}$).

For example, the set $CHS_{PSCICHS}^{FINAL,TX}$ may be equal to one among the following:

- $CHS_{PSCICHS}^{SCH,TX}$. $CHS_{PSCICHS}^{SCH,TX} - CHS_{PSCICHS}^{EXC,TX}$.
- $CHS_{PSCICHS}^{INC,TX}$.
- $CHS_{PSCICHS}^{INC,TX} - CHS_{PSCICHS}^{EXC,TX}$.

$CHS_{PSCICHS}^{INC,TX}$ is a PSCICHS set, and $CHS_{PSCICHS}^{EXC,TX}$ is another PSCICHS set.

Optionally, the set $CHS_{PSCICHS}^{INC,TX}$ may be equal to a "preferred PSCICHS set" (e.g., denoted as $CHS_{PSCICHS}^{PRIO,TX}$).

Optionally, the set $CHS_{PSCICHS}^{PRIO,TX}$ may include (e.g., include and only include) some or all PSCICHSs in the PSCICHS set respectively triggered by $N_{conflict}^{SL,sel}$ resource conflicts (e.g., sequentially denoted as $c_{i_0^p}^{SL}$, $c_{i_1^p}^{SL}$, $\cdots\cdots$, $c_{i_{N_{conflict}^{SL,sel}-1}^p}^{SL}$ in descending order of the priorities) having the highest priorities among the resource conflicts $c_0^{SL}$, $c_1^{SL}$, $\cdots\cdots$, $c_{N_{conflict}^{SL,det}-1}^{SL}$, where $N_{conflict}^{SL,sel} \geq 1$. Specifically, for example, the set $CHS_{PSCICHS}^{PRIO,TX}$ may be defined according to one of the following methods:

- A first definition of the preferred PSCICHS set: the set $CHS_{PSCICHS}^{PRIO,TX}$ is equal to a union of PSCICHS sets (i.e., $CHS_{PSCICHS,i_0^p}^{SCH,TX}$, $CHS_{PSCICHS,i_1^p}^{SCH,TX}$, $\cdots\cdots$, $CHS_{PSCICHS,i_{N_{conflict}^{SL,sel}-1}^p}^{SCH,TX}$) respectively corresponding to the conflicts $c_{i_0^p}^{SL}$, $c_{i_1^p}^{SL}$, $\cdots\cdots$, $c_{i_{N_{conflict}^{SL,sel}-1}^p}^{SL}$.

- A second definition of the preferred PSCICHS set: the set $CHS_{PSCICHS}^{PRIO,TX}$ is equal to a union of PSCICHS sets (i.e., $CHS_{PSCICHS,i_0^p}^{SCH,TX}$, $CHS_{PSCICHS,i_1^p}^{SCH,TX}$, $\cdots\cdots$, $CHS_{PSCICHS,i_{N_{conflict}^{SL,sel}-2}^p}^{SCH,TX}$) respectively corresponding to the conflicts $c_{i_0^p}^{SL}$, $c_{i_1^p}^{SL}$, $\cdots\cdots$, $c_{i_{N_{conflict}^{SL,sel}-2}^p}^{SL}$, and a PSCICHS set $CHS_{PSCICHS,i_{N_{conflict}^{SL,sel}-1}^p}^{SCH,TX,SUB}$, wherein the set $CHS_{PSCICHS,i_{N_{conflict}^{SL,sel}-1}^p}^{SCH,TX,SUB}$ is equal to the set $CHS_{PSCICHS,i_{N_{conflict}^{SL,sel}-1}^p}^{SCH,TX}$, or is equal to a subset of the set $CHS_{PSCICHS,i_{N_{conflict}^{SL,sel}-1}^p}^{SCH,TX}$.

Optionally, the set $CHS_{PSCICHS}^{PRIO,TX}$ may include (e.g., include and only include) $N_{PSCICHS}^{SL,sel}$ PSCICHSs having the highest priorities in the set $CHS_{PSCICHS}^{SCH,TX}$, where $N_{PSCICHS}^{SL,sel} \geq 1$.

Optionally, $N_{conflict}^{SL,sel}$ may be a predefined or configured or pre-configured value, or may be determined by one or more predefined or configured or pre-configured values.

Optionally, $N_{PSCICHS}^{SL,sel}$ may be a predefined or configured or pre-configured value, or may be determined by one or more predefined or configured or pre-configured values.

Optionally, $N_{conflict}^{SL,sel}$ and/or $N_{PSCICHS}^{SL,sel}$ may be related to one or more among the following:

- The maximum number (e.g., denoted as $N_{PSCICHS}^{MAX,TX}$) of PSCICHSs that can be transmitted (e.g., transmitted simultaneously in the same slot, or transmitted simultaneously in the same symbol or the same group of symbols) by the UE. Optionally, if the PSCICHS is configured to be multiplexed with the PSFCH on overlapping time domain resources, then the "maximum number of PSCICHSs" may be the maximum number of PSCICHSs and PSFCHs.

- The maximum PSCICHS output power (e.g., denoted as $P_{CMAX}^{PSCICHS}$). The $P_{CMAX}^{PSCICHS}$ may be related to $N_{PSCICHS}^{SCH,TX}$, or may be related to $N_{PSCICHS}^{FINAL,TX}$. Optionally, if the PSCICHS is configured to be multiplexed with the PSFCH on overlapping time domain resources, then the "maximum PSCICHS output power" may be the maximum output power of PSCICHSs and PSFCHs.

For example, $N_{conflict}^{SL,sel}$ may be the number of resource conflicts satisfying $N_{PSCICHS}^{MAX,TX}$ and/or $P_{CMAX}^{PSCICHS}$ and/or other restrictive conditions (e.g., including $N_{conflict}^{SL,sel} \leq N_{conflict}^{SL,det}$) (e.g., the maximum number of resource conflicts satisfying $N_{PSCICHS}^{MAX,TX}$ and/or $P_{CMAX}^{PSCICHS}$ and/or the other restrictive conditions, or the number of resource conflicts satisfying $N_{PSCICHS}^{MAX,TX}$ and/or $P_{CMAX}^{PSCICHS}$ and/or the other restrictive conditions and allowing the number of elements in the set $CHS_{PSCICHS}^{PRIO,TX}$ to be the maximum, or the number of resource conflicts satisfying $N_{PSCICHS}^{MAX,TX}$ and/or $P_{CMAX}^{PSCICHS}$ and/or the other restrictive conditions and autonomously selected by the UE).

As another example, $N_{PSCICHS}^{SL,sel}$ may be the number of PSCICHSs satisfying $N_{PSCICHS}^{MAX,TX}$ and/or $P_{CMAX}^{PSCICHS}$ and/or other restrictive conditions (e.g., including $N_{PSCICHS}^{SL,sel} \leq N_{PSCICHS}^{SCH,TX}$) (e.g., the maximum number of PSCICHSs satisfying $N_{PSCICHS}^{MAX,TX}$ and/or $P_{CMAX}^{PSCICHS}$ and/or the other restrictive conditions, or the number of PSCICHSs satisfying $N_{PSCICHS}^{MAX,TX}$ and/or $P_{CMAX}^{PSCICHS}$ and/or the other restrictive conditions and autonomously selected by the UE).

Optionally, for the first definition of the preferred PSCICHS set, for $i \in \left\{ i_0^p, i_1^p, \ldots, i_{N_{conflict}^{SL,sel}-1}^p \right\}$, all PSCICHSs in the set $CHS_{PSCICHS,i}^{SCH,TX}$ belong to the set $CHS_{PSCICHS}^{PRIO,TX}$, and for $i \notin \left\{ i_0^p, i_1^p, \ldots, i_{N_{conflict}^{SL,sel}-1}^p \right\}$, no PSCICHS in the set $CHS_{PSCICHS,i}^{SCH,TX}$ belongs to the set $CHS_{PSCICHS}^{PRIO,TX}$. For example, if $N_{PSCICHS}^{MAX,TX} = 6$ and $N_{conflict}^{SL,det} = 3$, and if the resource conflict $c_0^{SL}$ triggers three PSCICHSs: $chs_{0,0}^{SCH,TX,PSCICHS}$, $chs_{0,1}^{SCH,TX,PSCICHS}$, and $chs_{0,2}^{SCH,TX,PSCICHS}$, the resource conflict $c_1^{SL}$ triggers two PSCICHSs: $chs_{1,0}^{SCH,TX,PSCICHS}$ and $chs_{1,1}^{SCH,TX,PSCICHS}$, the resource conflict $c_2^{SL}$ triggers two PSCICHSs: $chs_{2,0}^{SCH,TX,PSCICHS}$ and $chs_{2,1}^{SCH,TX,PSCICHS}$, and the priority order of the resource conflicts $c_0^{SL}$、$c_1^{SL}$ and $c_2^{SL}$ decreases sequentially, then $N_{conflict}^{SL,sel}$ may be the maximum number of resource conflicts satisfying $N_{PSCICHS}^{MAX,TX}$ and/or $P_{CMAX}^{PSCICHS}$ and/or other restrictive conditions. For example, $N_{conflict}^{SL,sel}$ is equal to 2, and correspondingly, the set

$$CHS_{PSCICHS}^{TX,prio} = \{ chs_{0,0}^{SCH,TX,PSCICHS}, chs_{0,1}^{SCH,TX,PSCICHS},$$

$$chs_{0,2}^{SCH,TX,PSCICHS}, chs_{1,0}^{SCH,TX,PSCICHS}, chs_{1,1}^{SCH,TX,PSCICHS} \}$$

Optionally, for the second definition of the preferred PSCICHS set, for $i \in \left\{ i_0^p, i_1^p, \ldots, i_{N_{conflict}^{SL,sel}-2}^p \right\}$, all PSCICHSs in the set $CHS_{PSCICHS,i}^{SCH,TX}$ belong to the set $CHS_{PSCICHS}^{PRIO,TX}$. For $i = i_{N_{conflict}^{SL,sel}-1}^p$, due to the restriction by $N_{PSCICHS}^{MAX,TX}$ and/or $P_{CMAX}^{PSCICHS}$ and/or other restrictive conditions, only some of PSCICHSs in the set $CHS_{PSCICHS,i}^{SCH,TX}$ (e.g., several PSCICHSs having the highest priorities in the set $CHS_{PSCICHS,i}^{SCH,TX}$, or several PSCICHSs autonomously selected by the UE from the set $CHS_{PSCICHS,i}^{SCH,TX}$) may belong to the set $CHS_{PSCICHS}^{PRIO,TX}$, or all of the PSCICHSs may belong to the set $CHS_{PSCICHS}^{PRIO,TX}$. For example, if $N_{PSCICHS}^{MAX,TX} = 6$, $N_{conflict}^{SL,det} = 3$, and if the resource conflict $c_0^{SL}$ triggers three PSCICHSs: $chs_{0,0}^{SCH,TX,PSCICHS}$, $chs_{0,1}^{SCH,TX,PSCICHS}$, $chs_{0,2}^{SCH,TX,PSCICHS}$, the resource conflict $c_1^{SL}$ triggers two PSCICHSs: $chs_{1,0}^{SCH,TX,PSCICHS}$, $chs_{1,1}^{SCH,TX,PSCICHS}$, the resource conflict $c_2^{SL}$ triggers two PSCICHSs: $chs_{2,0}^{SCH,TX,PSCICHS}$, $chs_{2,1}^{SCH,TX,PSCICHS}$, and the priority order of the resource conflicts $c_0^{SL}$, $c_1^{SL}$, and $c_2^{SL}$ decreases sequentially, and if the priority of $chs_{2,0}^{SCH,TX,PSCICHS}$ is higher than the priority of $chs_{2,1}^{SCH,TX,PSCICHS}$, then $N_{conflict}^{SL,sel}$ may be the number of resource conflicts satisfying $N_{PSCICHS}^{MAX,TX}$ and/or $P_{CMAX}^{PSCICHS}$ and/or other restrictive conditions and allowing the number of elements in the set $CHS_{PSCICHS}^{PRIO,TX}$ to be the maximum. For example, $N_{conflict}^{SL,sel}$ is equal to 3. Correspondingly, the set $CHS_{PSCICHS}^{TX,prio} = \{chs_{0,0}^{SCH,TX,PSCICHS}, \quad chs_{0,1}^{SCH,TX,PSCICHS}, chs_{0,2}^{SCH,TX,PSCICHS}, chs_{1,0}^{SCH,TX,PSCICHS}, chs_{1,1}^{SCH,TX,PSCICHS}, chs_{2,0}^{SCH,TX,PSCICHS}\}$, and the number of elements included therein $N_{PSCICHS}^{SCH,TX} = N_{PSCICHS}^{MAX,TX} = 6$.

Optionally, for $i \in \left\{ 0, 1, \ldots, N_{conflict}^{SL,det} - 1 \right\}, j \in \left\{ 0, 1, \ldots, N_i^{SL,det,conflict} - 1 \right\}$, the priority value (e.g., denoted as $p_{i,j}^{SCH,TX,PSCICHS}$) associated with (or "corresponding to") $chs_{i,j}^{SCH,TX,PSCICHS}$ may be determined according to one of the following methods:

- $$p_{i,j}^{SCH,TX,PSCICHS} = \tilde{p}_{i,j}^{SCH,TX,PSCICHS}.$$

- $$p_{i,j}^{SCH,TX,PSCICHS} = \max(\tilde{p}_{i,j}^{SCH,TX,PSCICHS}, p_{thresh}^{PSCICHS}).$$

- $$p_{i,j}^{SCH,TX,PSCICHS} = \min(\tilde{p}_{i,j}^{SCH,TX,PSCICHS}, p_{thresh}^{PSCICHS}).$$

$p_{thresh}^{PSCICHS}$ may be a predefined or configured or pre-configured value, or may be determined by one or more predefined or configured or pre-configured values, and $\tilde{p}_{i,j}^{SCH,TX,PSCICHS}$ may be related to one or more among $SCI_{i,0}^{SL,conflict}$, $SCI_{i,1}^{SL,conflict}, \ldots, SCI_{i,N_i^{SL,det,conflict}-1}^{SL,conflict}$.

For example, $\tilde{p}_{i,j}^{SCH,TX,PSCICHS}$ may be determined according to one of the following methods:

- $$\tilde{p}_{i,j}^{SCH,TX,PSCICHS} = p_{i,j}^{SCI}.$$

- $$\tilde{p}_{i,j}^{SCH,TX,PSCICHS} = p_{i,N_i^{SL,det,conflict}-1-j}^{SCI}.$$

- $$\tilde{p}_{i,j}^{SCH,TX,PSCICHS} = p_{i,min}^{SCI}.$$

- $$\tilde{p}_{i,j}^{SCH,TX,PSCICHS} = p_{i,max}^{SCI}.$$

- $$\tilde{p}_{i,j}^{SCH,TX,PSCICHS} = p_{i,max}^{SCI} - p_{i,j}^{SCI}.$$

- $$\tilde{p}_{i,j}^{SCH,TX,PSCICHS} = p_{max}^{PSCICHS} - p_{i,j}^{SCI}.$$

- If $p_{i,j}^{SCI} \neq p_{i,min}^{SCI}$, then $\tilde{p}_{i,j}^{SCH,TX,PSCICHS} = p_{i,min}^{SCI}$, otherwise, $\tilde{p}_{i,j}^{SCH,TX,PSCICHS} = p_{i,max}^{SCI}$.

- If $p_{i,j}^{SCI} \neq p_{i,min}^{SCI}$, then $\tilde{p}_{i,j}^{SCH,TX,PSCICHS} = p_{i,min}^{SCI}$, otherwise, $\tilde{p}_{i,j}^{SCH,TX,PSCICHS} = p_{max}^{PSCICHS}$. Wherein

- $p_{i,j}^{SCI}$ is equal to the priority value indicated in $SCI_{i,j}^{SL,conflict}$ (e.g., the priority value indicated by means of the "priority" field in SCI format 1-A).

- $$p_{i,min}^{SCI} = \min(p_{i,0}^{SCI}, p_{i,1}^{SCI}, \dots, p_{i,N_i^{SL,det,conflict}-1}^{SCI}).$$

- $$p_{i,max}^{SCI} = \max(p_{i,0}^{SCI}, p_{i,1}^{SCI}, \dots, p_{i,N_i^{SL,det,conflict}-1}^{SCI}).$$

- $p_{min}^{PSCICHS}$ is equal to the minimum priority value (e.g., $p_{max}^{PSCICHS} = 0$, or $p_{max}^{PSCICHS} = 1$) associated with one PSCICHS transmission.

- $p_{max}^{PSCICHS}$ is equal to the maximum priority value (e.g., $p_{max}^{PSCICHS} = 7$, or $p_{max}^{PSCICHS} = 8$) associated with one PSCICHS transmission.

Optionally, for $i \in \{0, 1, \dots, N_{conflict}^{SL,det} - 1\}$, the priority value (e.g., denoted as $p_i^{SL,conflict}$) associated with (or "corresponding to") the resource conflict $c_i^{SL}$ may be related to one or more among $p_{i,0}^{SCH,TX,PSCICHS}$, $p_{i,1}^{SCH,TX,PSCICHS}$, ......, $p_{i,N_i^{SL,det,conflict}-1}^{SCH,TX,PSCICHS}$, For example, $p_i^{SL,conflict}$ may be determined according to one of the following methods:

- $$p_i^{SL,conflict} = \min(p_{i,0}^{SCH,TX,PSCICHS}, p_{i,1}^{SCH,TX,PSCICHS}, \dots, p_{i,N_i^{SL,det,conflict}-1}^{SCH,TX,PSCICHS}).$$

$$p_i^{SL,conflict} =$$
$$\max(p_{i,0}^{SCH,TX,PSCICHS}, p_{i,1}^{SCH,TX,PSCICHS}, \dots, p_{i,N_i^{SL,det,conflict}-1}^{SCH,TX,PSCICHS})$$

Optionally, the set $CHS_{PSCICHS}^{EXC,TX}$ may be equal to a set of all candidate exclusion objects in a reference PSCICHS set (e.g., denoted as a set $CHS_{PSCICHS}^{REF,TX}$). The set $CHS_{PSCICHS}^{REF,TX}$ may be the set $CHS_{PSCICHS}^{SCH,TX}$, or the set $CHS_{PSCICHS}^{INC,TX}$, or the set $CHS_{PSCICHS}^{PRIO,TX}$. Optionally, if two or more PSCICHSs in the set $CHS_{PSCICHS}^{REF,TX}$ correspond to the same PSCICHS resource (e.g., the same PSCICHS resource $r_k^{CI,RES,IDX}$ in the same PSCICHS resource set $R_{IDX}^{CI,RES}$), all of the two or more PSCICHSs, excluding several (e.g., one) PSCICHSs having the highest priorities, are candidate exclusion objects. Specifically, for example, for $CHS_{PSCICHS}^{REF,TX} = CHS_{PSCICHS}^{SCH,TX}$, if $i_0 \in \{0, 1, \dots, N_{conflict}^{SL,det} - 1\}$, $j_0 \in \{0, 1, \dots, N_{i_0}^{SL,det,conflict} - 1\}$, $i_1 \in \{0, 1, \dots, N_{conflict}^{SL,det} - 1\}$, $j_1 \in \{0, 1, \dots, N_{i_1}^{SL,det,conflict} - 1\}$, $i_2 \in \{0, 1, \dots, N_{conflict}^{SL,det} - 1\}$, $j_2 \in \{0, 1, \dots, N_{i_1}^{SL,det,conflict} - 1\}$, $(i_0, j_0) \neq (i_1, j_1) \neq (i_2, j_2)$, and if $chs_{i_0,j_0}^{SCH,TX,PSCICHS}$, $chs_{i_1,j_1}^{SCH,TX,PSCICHS}$ and $chs_{i_2,j_2}^{SCH,TX,PSCICHS}$ correspond to the same PSCICHS resource, then two PSCICHSs having lower priorities among $chs_{i_0,j_0}^{SCH,TX,PSCICHS}$, $chs_{i_1,j_1}^{SCH,TX,PSCICHS}$, and $chs_{i_2,j_2}^{SCH,TX,PSCICHS}$ are candidate exclusion objects. Optionally, if $chs_{i_0,j_0}^{SCH,TX,PSCICHS}$, $chs_{i_1,j_1}^{SCH,TX,PSCICHS}$ and $chs_{i_2,j_2}^{SCH,TX,PSCICHS}$ have the same priority, then the UE autonomously determines which two among $chs_{i_0,j_0}^{SCH,TX,PSCICHS}$, $chs_{i_1,j_1}^{SCH,TX,PSCICHS}$, and $chs_{i_2,j_2}^{SCH,TX,PSCICHS}$ are candidate exclusion objects (e.g., randomly determines two from the three).

Optionally, in Embodiment 1 of the present invention, for a set A and a set B, "B-A" may represent a set consisting of all elements that relate to the set B but do not relate to the set A.

In this way, according to Embodiment 1, the present invention provides a method, in which a priority is determined for each resource conflict, so as to determine, on the basis of the priority, whether to transmit one or more resource conflict indications triggered by the resource conflict, thereby effectively solving the problem of priority when resource conflict indications triggered by a plurality of resource conflicts are to be transmitted on overlapping time domain resources.

In the present invention, "inter-UE coordination" and other related terms (e.g., "coordination information indication", "coordination request indication", "preferred resource indication", "non-preferred resource indication", "resource conflict indication", "sidelink coordination control information", "physical sidelink coordination information channel/signal", "physical sidelink coordination request channel/signal", etc.) may be defined by functions thereof in a system and/or a corresponding procedure and/or corresponding signaling. When applied to a specific system, the terms may be replaced with other names.

[Variant Embodiment]

Hereinafter, FIG. 2 is used to illustrate a user equipment that can perform the method performed by a user equipment described in detail above in the present invention as a variant embodiment.

FIG. 2 shows a block diagram of a user equipment (UE) to which the present invention relates.

As shown in FIG. 2, a user equipment (UE) 20 includes a processor 201 and a memory 202. The processor 201 may include, for example, a microprocessor, a microcontroller, an embedded processor, and the like. The memory 202 may, for example, include a volatile memory (for example, a random access memory (RAM)), a hard disk drive (HDD), a nonvolatile memory (for example, a flash memory), or other memories. The memory 202 has program instructions stored thereon. The instructions, when run by the processor 201, can implement the above method performed by a user equipment as described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment shown above may include more modules, for example, modules that may be developed or developed in the future and that may be used for a base station, an Access and Mobility Management Function (AMF), a User Plane Function (UPF), a Mobility Management Entity (MME), a Serving Gateway (S-GW), or a UE. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments. Those skilled in the art should understand that part or all of the mathematical expressions, mathematical equations, or mathematical inequalities may be simplified or transformed or rewritten to some extent, for example, incorporating constant terms, or interchanging two addition terms, or interchanging two multiplication terms, or moving a term from the left side of an equation or inequality to the right side after changing the plus or minus sign thereof, or moving a term from the right side of an equation or inequality to the left side after changing the plus or minus sign thereof or the like. Mathematical expressions, mathematical equations, or mathematical inequalities before and after the simplification or transformation or rewriting may be considered to be equivalent to each other.

It should be understood that the above-described embodiments of the present invention may be implemented through software, hardware, or a combination of software and hardware. For example, various components of the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present invention, the term "base station" may refer to a mobile communication data and/or control switching center having specific transmission power and a specific coverage area and including functions such as resource allocation and scheduling, data reception and transmission, and the like. "User equipment" may refer to a user mobile terminal, for example, including terminal devices that can communicate with a base station or a micro base station wirelessly, such as a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and terminal device used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general purpose processor may be a microprocessor, or the processor may be an existing processor, a controller, a microcontroller, or a state machine. The aforementioned general purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by a user equipment (UE), **characterized by** comprising:

   determining a resource conflict caused by resources respectively reserved in one or more SCI formats 1-A, and transmitting a physical sidelink feedback channel (PSFCH) for indication of the resource conflict, wherein a priority value of the PSFCH is equal to the smallest value among priority values respectively indicated by the one or more SCI formats 1-A.

2. A user equipment, comprising:

   a processor; and
   a memory, having instructions stored therein,
   wherein the instructions, when run by the processor, perform the method according to claim 1.

Determine one or more PSCICHSs to be transmitted in a PSCICHS transmission occasion ⟋ S101

Determine one or more PSCICHSs actually transmitted in the PSCICHS transmission occasion ⟋ S103

FIG. 1

## INTERNATIONAL SEARCH REPORT

| International application No. |
|---|
| **PCT/CN2022/122603** |

### A. CLASSIFICATION OF SUBJECT MATTER

H04W 72/04(2009.01)i; H04W 72/02(2009.01)i; H04W 72/10(2009.01)i; H04W 24/02(2009.01)i; H04L 5/00(2006.01)i

According to International Patent Classification (IPC) or to both national classification and IPC

### B. FIELDS SEARCHED

Minimum documentation searched (classification system followed by classification symbols)

H04W72/-;H04W24/-;H04L5/-

Documentation searched other than minimum documentation to the extent that such documents are included in the fields searched

Electronic data base consulted during the international search (name of data base and, where practicable, search terms used)

CNTXT; CNABS; CNKI; 百度, BAIDU: 侧行链路, 协作, 物理侧行反馈信, PSFCH, 资源, 冲突, 重叠, 优先级, 优先, 顺序, 次序, 时机, 预配置, 指示, 物理侧行协作信息信道/信号, PSCICHS VEN; USTXT; EPTXT; WOTXT; IEEE; 3GPP: sidelink?, coordinat+, PSFCH, Physical Sidelink Feedback Channel, resource?, conflict?, collision?, overlap+, prioritization, priority, order +, occasion, pre-configure, preset, indication, Physical Sidelink Coordination Information Channel/Signal, PSCICHS

### C. DOCUMENTS CONSIDERED TO BE RELEVANT

| Category* | Citation of document, with indication, where appropriate, of the relevant passages | Relevant to claim No. |
|---|---|---|
| Y | QUALCOMM INC. ""R1-2101910 Reliability and Latency Enhancements for Mode 2"" *3GPP TSG RAN WG1 Meeting #104-e,* Vol. , No. , 29 January 2021 (2021-01-29), ISSN: , section 2 | 1, 2 |
| Y | US 2021028910 A1 (FG INNOVATION COMPANY LIMITED) 28 January 2021 (2021-01-28) description, paragraphs [0040]-[0044] | 1-2 |
| A | CN 113273120 A (PANASONIC INTELLECTUAL PROPERTY CORPORATION OF AMERICA) 17 August 2021 (2021-08-17) entire document | 1-2 |
| A | WO 2021090459 A1 (NTT DOCOMO, INC.) 14 May 2021 (2021-05-14) entire document | 1-2 |
| A | WO 2020192695 A1 (SHARP KABUSHIKI KAISHA et al.) 01 October 2020 (2020-10-01) entire document | 1-2 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 November 2022** | **21 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2022/122603** |

**C.    DOCUMENTS CONSIDERED TO BE RELEVANT**

| Category* | Citation of document, with indication, where appropriate, of the relevant passages | Relevant to claim No. |
|---|---|---|
| A | US 2010131635 A1 (NORTEL NETWORKS LIMITED) 27 May 2010 (2010-05-27) entire document | 1-2 |

Form PCT/ISA/210 (second sheet) (January 2015)

**INTERNATIONAL SEARCH REPORT**
Information on patent family members

| International application No. |
| --- |
| **PCT/CN2022/122603** |

| Patent document cited in search report | | | Publication date (day/month/year) | Patent family member(s) | | | Publication date (day/month/year) |
| --- | --- | --- | --- | --- | --- | --- | --- |
| US | 2021028910 | A1 | 28 January 2021 | CN | 114145061 | A | 04 March 2022 |
| | | | | EP | 4005315 | A1 | 01 June 2022 |
| | | | | WO | 2021013180 | A1 | 28 January 2021 |
| CN | 113273120 | A | 17 August 2021 | WO | 2020142992 | A1 | 16 July 2020 |
| | | | | IN | 202147029208 | A | 02 July 2021 |
| | | | | EP | 3909179 | A1 | 17 November 2021 |
| | | | | US | 2021400681 | A1 | 23 December 2021 |
| | | | | JP | 2022522390 | W | 19 April 2022 |
| | | | | EP | 3909179 | A4 | 20 April 2022 |
| WO | 2021090459 | A1 | 14 May 2021 | None | | | |
| WO | 2020192695 | A1 | 01 October 2020 | US | 2022201710 | A1 | 23 June 2022 |
| | | | | EP | 3952399 | A1 | 09 February 2022 |
| | | | | CN | 111757342 | A | 09 October 2020 |
| | | | | BR | 112021019342 | A2 | 07 December 2021 |
| | | | | VN | 83653 | A | 25 January 2022 |
| | | | | EP | 3952399 | A4 | 17 August 2022 |
| US | 2010131635 | A1 | 27 May 2010 | US | 7941531 | B2 | 10 May 2011 |

Form PCT/ISA/210 (patent family annex) (January 2015)